(19)

Europäisches
Patentamt
European
Patent Office
Office européen
des brevets

(11)  **EP 4 434 951 A1**

(12)  **EUROPEAN PATENT APPLICATION**

(43) Date of publication:
**25.09.2024  Bulletin 2024/39**

(21) Application number: **24157653.7**

(22) Date of filing: **14.02.2024**

(51) International Patent Classification (IPC):
**C04B 20/02** $^{(2006.01)}$     **C04B 14/10** $^{(2006.01)}$

(52) Cooperative Patent Classification (CPC):
(C-Sets available)
**C04B 20/026**                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023  SE 2350319**

(71) Applicant: **Skanska Sverige AB
112 74 Stockholm (SE)**

(72) Inventor: **Hedlund, Hans
442 93 KAREBY (SE)**

(74) Representative: **AWA Sweden AB
Matrosgatan 1
Box 5117
200 71 Malmö (SE)**

(54)  **METHOD FOR TREATMENT OF CLAY**

(57)     A method for treatment of clay is described. The method comprises introducing the clay in a vibratory mill, a ball mill and/or a vibratory ball mill; and processing the clay in the vibratory mill, ball mill and/or vibratory ball mill until the clay minerals comprised in the clay have reached a predetermined degree of amorphization.

FIG. 7

EP 4 434 951 A1

(52) Cooperative Patent Classification (CPC): (Cont.)

C-Sets
**C04B 20/026, C04B 14/10**

**Description**

Technical field of the invention

The present invention relates to a method for treatment of clay.

Background of the Invention

Concrete is a composite material widely used as a building material. The amounts used worlwide every year are enormous. The widespread use results in a number of environmental impacts. The production process for cement and concrete e.g., produces large volumes of greenhouse gas emissions, leading to net 8% of global emissions.

Cement is a binding agent used in concrete. It hardens upon contact with water to a product that is not soluble in water. It is produced by heating limestone and clay to a temperature of about 1450°C. The enormous amounts of cement that is needed in concrete production is dependent upon the avalability of limestone. Due to e.g., environmental regulations, the availability of limestone may be restricted in the future, which may lead to a risk of lack of cement, which can be extremely troublesome for the construction/building industry in the future since there is no replacement available that fulfils the specifications for cement replacement. It has for instance been difficult to find cement replacements that have adequate binding capacity.

Summary of the Invention

It is an object of the present invention to provide a binder material and a method for providing a binder material, which material is useful as a supplementary cementitious material in e.g., concrete and which provides an excellent combination of good mechanical properties and good availability.

This object is achieved by a method for treatment of clay, the method comprising a) introducing the clay in a vibratory mill, a ball mill and/or a vibratory ball mill; and b) processing the clay in the vibratory mill, ball mill and/or vibratory ball mill until the clay minerals comprised in the clay have reached a predetermined degree of amorphization.

Step b) of the method may further comprise processing the clay until quartz comprised in the clay has reached a predetermined degree of amorphization.

Step b) may further comprise processing the clay until calzite comprised in the clay has reached a predetermined degree of amorphization.

The degree of amorphization of the clay minerals may be at least 40%, preferably at least 45%, more preferably at least 50%.

The degree of amorphization of the quartz may be at least 5%, preferably at least 8%, more preferably at least 10%, even more preferably at least 15%, even more preferably at least 18%, most preferably at least 20%.

The degree of amorphization of the calzite may be at least 30%, preferably at least 35%, more preferably at least 40%.

The degree of amorphization of the clay minerals may be at least 50%, the degree of amorphization of the quartz may be at least 20%, and the degree of amorphization of the calzite may be at least 30%.

The clay minerals may be selected from illite, kaolinite and/or muscovite.

Step b) may further comprise processing the clay until albite comprised in the clay has reached a predetermined degree of amorphization.

The degree of amorphization of the albite may be at least 45%, preferably at least 50%, more preferably 55%; even more preferably at least 60%.

According to one aspect there is provided a material useful as a cement replacement in concrete, said material being produced in accordance with the method according to the above.

Brief Description of the Drawings

These and other aspects, features and advantages of which embodiments of the invention are capable of, will be apparent and elucidated from the following description of embodiments and aspects of the present invention, reference being made to the accompanying drawings, in which

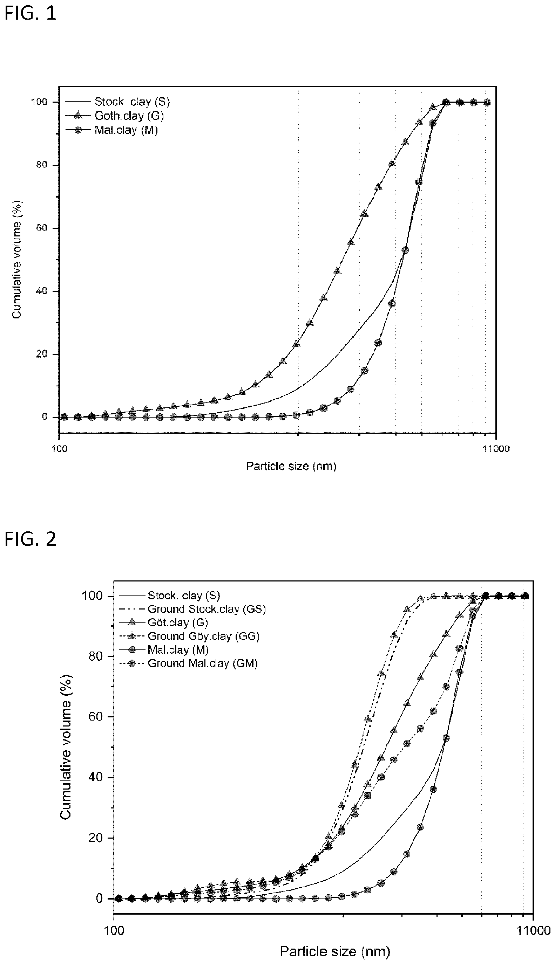

FIG. 1 shows particle size distribution of natural clays used in the method according to the present invention, where clay denoted (S) originates from Stockholm, (G) originates from Gothenburg, and (M) originates from Malmö.

FIG. 2 shows particle size distribution of natural clays used in the method according to the present invention, where (S) originates from Stockholm, (G) originates from Gothenburg, and (M) originates from Malmö, and also shows the particle size distribution of the same clays after being subject to treatment in accordance with the method of the present invention.

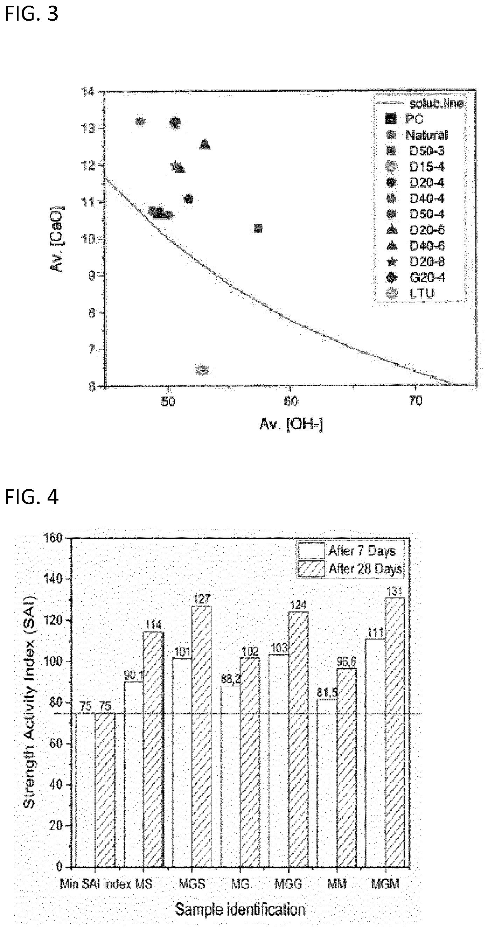

FIG. 3 shows the result of a Frattini test. The samples are prepared as a solution comprising 100 ml deionized water and stored for 8 days at 40°C. PC is cement only, in 100 ml deionized water. In the remaining samples, 20% of the cement has been replaced with clay treated in accordance with the method of the present invention. Natural is a composition with natural clay which has not been treated in a mill according to the present invention, but has only been dried and slightly milled to disperge lumps. G20-4h is a sample of clay from Gothenburg, processed for 4 h in a mill and with a degree of filling in the mill of 20. Further, the designation "D" stands for dry grinding and Stockholm clay, the number before the hyphen is the filling ratio (kg of balls/kg of clay) and the number after the hyphen stands for the time of grinding in hours. Thus, D50-3 is dry grinding of Stockholm clay with a filling ratio of 50 and a time of grinding of 3 hours, and D15-4 is dry grinding of Stockholm clay with a filling ratio of 15 and a time of grinding of 4 hours.

FIG. 4 shows the Strength Activity Index (SAI), which is a measure of the pozzolanic activity of a material. The SAI is determined by comparing the compressive strength of a cement mixture containing the pozzolanic material to the compressive strength of a reference cement mixture that does not contain the material. The SAI is calculated as follows:

$$SAI = (\text{compressive strength of cement + pozzolan mixture}) / (\text{compressive strength of cement mixture without pozzolan}) * 100\%.$$

The SAI is expressed as a percentage, and a higher SAI indicates greater pozzolanic activity. A SAI of at least 75% is generally considered to indicate a highly pozzolanic material. The first leeter of the designations, i.e., the "M" stands for Mortar specimen, the second letter, when there are three letters, is a "G" and stands for grinded clay, and the third letter, and also the second letter when there are only two letters, stands for origin of clay, i.e., S = Stockholm, G = Gothenburg, and M = Malmö.

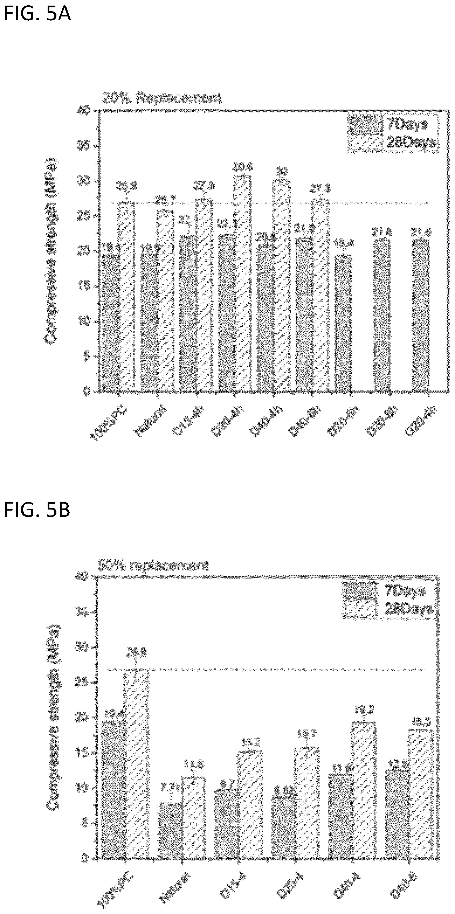

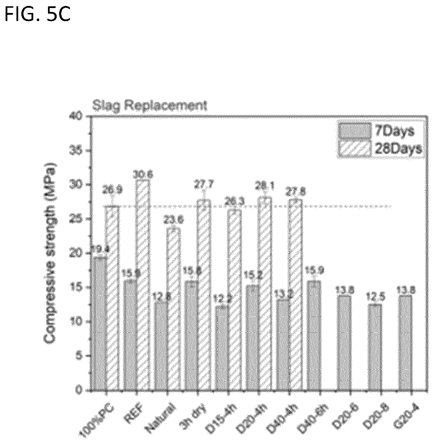

FIGS. 5A-5C shows results of replacement of cement with activated clay in accordance with the present invention. Usage tests with a composition water:clay = 0.5 (weight) and sand:binder = 3 (weight). 100% PC is a reference sample with only cement, sand and water. Natural is a composition of clay, which has not been subject to treatment in a vibratory mill, ball mill and/or vibratory ball mill, but only dried and subject to an easy grinding by hand to disperge lumps. The designations are the same as described above for FIG. 3. In Fig. 5A, 20% of the PC has been replaced with activated clay. In Fig. 5B, 50% of the cement has been replaced with activated clay. In FIG. 5C, REF is a sample with 50% replaced with slag, while the remaining samples are samples where 25% of the remaining cement has been replaced with clay (i.e. 50% slag, 25% cement and 25% clay). In this context, slag is grinded granulated blastfurnace slag (GGBS) for use in concrete, which fulfills the requirements according to SS-EN 15167-1. This European Standard (EN 15167) specifies requirements for the chemical and physical properties as well as quality control procedures for ground granulated blastfurnace slag for use as a type II addition in the production of concrete, including in particular cast-in-situ or prefabricated structural concrete conforming to EN 206-1. Ground granulated blastfurnace slag conforming to this European Standard may also be used in mortars and grouts.

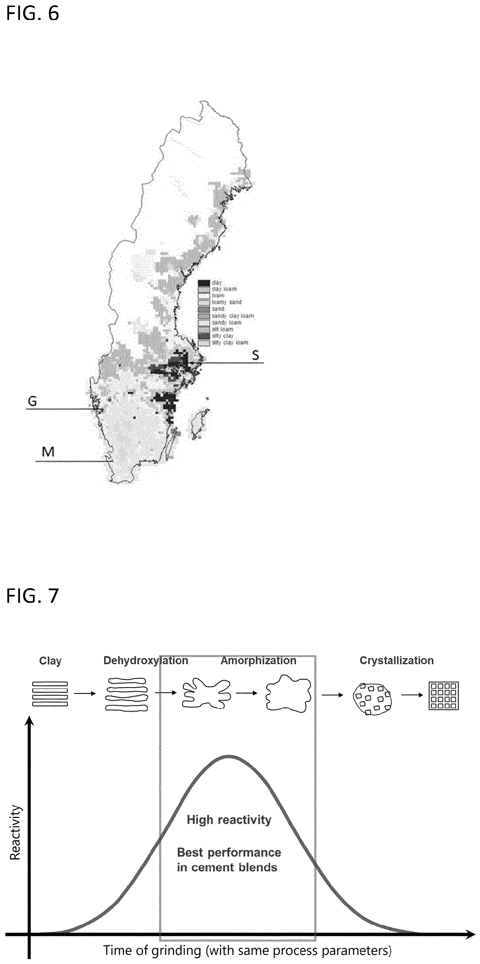

FIG. 6 shows a sketch map of the regions where the raw materials were collected, where S is Stockholm clay, G is Gothenburg clay and M is Malmö clay.

FIG. 7 is a schematization of the effect of grinding in the structural change of clay minerals and on its performance in cement blends.

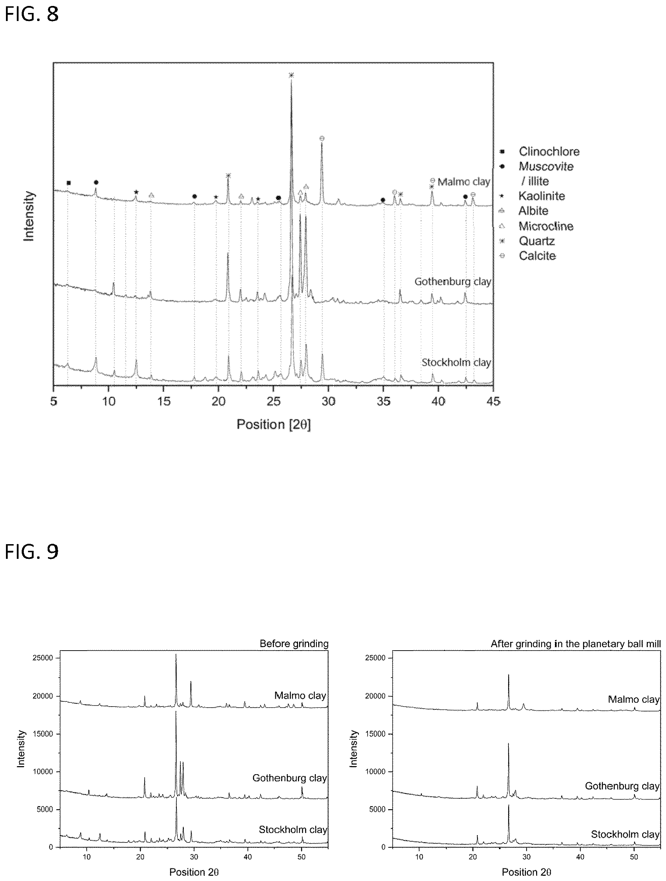

FIG. 8 shows identification of the phases in the treated clays through X-Ray diffractometry. In this test, the samples are exposed to X-rays, and a resulting diffraction pattern is obtained. From the patterns in the figure, it is possible to evaluate the angles and intensities of the X-rays that are scattered by the sample. The angles (x-axes) and intensities (y-axes) are then used to calculate the spacing between the atoms in the crystalline phase and the orientation and size of the crystals in the sample. Each crystalline structure (phase) has a unique diffraction pattern. To identify the phases present in the samples, the obtained pattern is compared to a database of known patterns, such as the International Centre for Diffraction Data (ICDD) database. Successively, with the help of the software, the measured diffraction pattern is paired with the closest match in the database. The clays treated with the proposed method contained the phases as per the legend. The intensity values are considered an arbitrary unit and adapted by the software for comparative purposes.

FIG. 9 shows the crystalline structure of the clays before and after grinding in a planetary ball mill (Retch PM 100 laboratory), analyzed through the X-Ray diffraction technique. A decrease in the peak intensities as well as the widening of the area under each peak, suggests a reduction of the crystalline structure and amorphization of the phase. This effect was visible for all the clay samples after grinding.

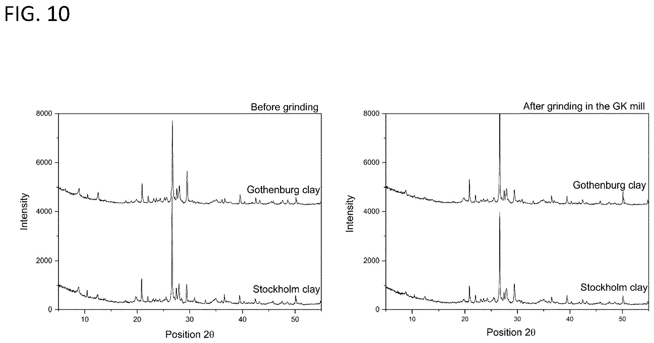

FIG. 10 shows the crystalline structure of the clays before and after grinding in a vibratory ball mill (GK), analyzed through the X-Ray diffraction technique. As previously described, the decrease in the peak intensities confirmed once again the proposed technique's ability to change the crystalline structure of the clays.

Detailed description

Specific embodiments of the invention will now be desribed. The present invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments is not intended to be limiting the invention. The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

It should be noted that the word "comprising" does not exclude the presence of other elements or steps than those listed and the words "a" or "an" preceding an element do not exclude the presence of a plurality of such elements.

The different aspects, alternatives and embodiments of the invention disclosed herein can be combined with one or more of the other aspects, alternatives and embodiments described herein. Two or more aspects can be combined.

Natural clays are a mixture of different phases, and amorphization is a crucial parameter for improving the chemical rectivity of a clay when used as supplementary cementitious materials (SCMs), i.e. a cement replacement in concrete. In their natural form, clays are arranged in layers with a good crystalline and ordered structure. However, amorphous content can always be present in small quantities, especially between the ordered layers or on the surface. Grinding is able to destruct the layered structure of the clay minerals. The schematic effect of the method according to the present invention is seen in Fig. 7, showing the structural change of clay minerals due to the treatment in the mill, i.e., the grinding, of the clay minerals and the performance thereof in cement blends. The clay particles having a high degree of amorphization after being subject to a method according to the present invention have surprisingly shown a high reactivity and good mechanical performance and binding capacity in mortar blends, as shown in FIG. 4.

Clays in natural form may have a high moisture ratio, such as around 50% by weight, but this will drop if the clay is allowd to dry. For the method according to the present invention a better effect is achieved if the clay has a lower moisture ratio, but a wet clay may be used as starting material, which may be dried in a pretreatment step, alternatively be dried in connection with the process in the mill.

Grinding in a vibratory mill, a ball mill and/or a vibratory ball mill in accordance with the present invention can create/accomplish amorphization of the phases, the degree of amorphization may be measured through X-ray diffractometry (XRD) and the degree of amorphisation giving an adequate result as SCM can be established. Each of the phases present in the natural clays may be identified in the XRD pattern and their degree of amorphization may be calculated from the peak's areas. In the studied natural clay mixtures (coming from Stockholm and Gothenburg), the inventors have seen that for obtaining a reactive material suitable as SCM it is necessary to achieve amorphization of certain components of a clay up to a certain extent.

The crystalline structure of the clays before and after grinding in a planetary ball mill is shown in Fig. 9, while the crystalline structure of the clays before and after grinding in a vibratory ball mill is shown in Fig. 10. The decrease seen in the peak intensities, as well as the widening of the area under each peak, shows the change in the crystalline structure of the clays, i.e. a reduction of the crystalline structure and amorphization of the phase.

The present invention thus relates to a method for treatment of clay. The method comprises a) introducing the clay in a vibratory mill, a ball mill and/or a vibratory ball mill; and b) processing the clay in the vibratory mill, ball mill and/or vibratory ball mill until the clay minerals comprised in the clay have reached a predetermined degree of amorphization.

The method may also comprise processing the clay until quartz comprised in the clay has reached a predetermined degree of amorphization.

The method may further comprise processing the clay until calzite comprised in the clay has reached a predetermined degree of amorphization.

The method may also comprise processing the clay until albite comprised in the clay has reached a predetermined degree of amorphization.

The components of the clays used according to the present invention, before being subject to the method as claimed, are mainly crystalline. The present inventors have, surprisingly, found that by treatment of the clays in accordance with a method as disclosed in the present application, the clay components, i.e. for instance the clay minerals, quartz, calzite and albite, will transfer from a crystalline material, i.e. characterized by highly ordered arrangement of atoms or molecules, which forms a well-defined crystal lattice or structure, to an amorphous structure, which lacks long-range order and has a disordered atomic or molecular arrangement. This change of the structure can have a significant impact on the reactivity of the material.

The degree of amorphization of the clay minerals may be at least 40%, preferably at least 45%, more preferably at least 50%.

The degree of amorphization of the quartz may be at least 5%, preferably at least 8%, more preferably at least 10%, even more preferably at least 15%, even more preferably at least 18%, most preferably at least 20%.

The degree of amorphization of the calzite may be at least 30%, preferably at least 35%, more preferably at least 40%.

The degree of amorphization of the clay minerals is at least 50%, the degree of amorphization of the quartz is at least 20% and the degree of amorphization of the calzite is at least 30%.

The degree of amorphization of the clay minerals may e.g., be at least 45%, the degree of amorphization of the quartz at least 15%, and the degree of amorphization of calzite at least 35%.

The degree of amorphization of the clay minerals may further be at least 50%, the degree of amorphization of the quartz at least 18%, and the degree of amorphization of calzite at least 40%.

The degree of amorphization of the albite may further be at least 45%, preferably at least 50%, more preferably 55%, even more preferably at least 60%.

Especially the higher numbers specified for the different degrees of amorphization mentioned above have shown extremely good results in the end product when used as supplementary cementitious materials (SCMs).

The clay minerals according to the present invention may be selected from illite, kaolinite and/or muscovite. Different mixtures of the clay minerals present in their natural form have shown the potential to be treated with the proposed method. Stockholm, Gothenburg, and Malmo clays are different mixtures of the clay minerals.

A further aspect of the present invention relates to a material useful as a cement replacement in concrete, said material being produced in accordance with the method according to the present invention.

The treatment of the clays in accordance with the present invention can be considered a mechanochemical activation process, where the mechanochemical activation means that the phase of part of the clay particles is transformed from crystalline phase to amorphous phase.

The frequency of the mill, time in the mill, etc., are not fixed, instead these factors depend on each other, but the main parameter of importance which needs to be measured and observed to determine if the clay has been adequately treated is the degree of amorphization. Thus, having the mill set on a low frequency means that the time needed in the mill to achieve adequate degree of amorphization is longer than if a higher frequency was used, and so forth.

Generally, the relationship between steel balls used in the ball mill and the clay, however, should be around 10:1 (weight to weight) to achieve enough effect, i.e., adequate degree of amorphization.

Examples

Three different clays originating from Stockholm, Gothenburg and Malmö were processed in a laboratory ball mill at LTU, Luleå University of Technology. Table 1 below shows the engineering properties ot the tested clays.

**Table 1.** Engineering properties of the tested raw clays

|  | Stockholm clay *(S)* | Göteborg clay *(G)* | Malmö clay *(M)* |
|---|---|---|---|
| Particle size distribution | | | |
| Sand (%) | 18 | 30 | Not tested |
| Silt (%) | 31 | 54 | Not tested |
| Clay(%) | 51 | 16 | Not tested |
| Consistency limits | | | |
| Liquid limit | 57 | 37 | 18 |
| Plasticity limit | 22.7 | 19.5 | 11.3 |

Table 2 below shows the chemical composition of the tested raw clays.

***Table 2.*** Chemical composition of the raw clays originating from Stockholm (S), Göteborg (G), and Malmö (M), in weight%

|  | Stockholm clay *(S)* | Göteborg clay *(G)* | Malmö clay *(M)* |
|---|---|---|---|
| CaO | 6.41 | 2.18 | 16.4 |
| $SiO_2$ | 52.6 | 59 | 49.8 |
| $Al_2O_3$ | 15.1 | 12 | 8.47 |
| $Fe_2O_3$ | 6.9 | 4.5 | 3.86 |

(continued)

|  | Stockholm clay *(S)* | Göteborg clay *(G)* | Malmö clay *(M)* |
|---|---|---|---|
| MgO | 2.51 | 1.5 | 1.84 |
| MnO | 0.0897 | 0.064 | 0.051 |
| $TiO_2$ | 0.696 | 0.607 | 0.511 |
| $P_2O_5$ | 0.153 | 0.176 | 0.161 |
| $K_2O$ | 3.78 | 3.24 | 2.37 |
| $Na_2O$ | 1.68 | 2.66 | 0.879 |
| $SO_3$ | - | - | - |
| L.O.I. | 7.5 | 4.5 | 15.6 |

Table 3 below shows the results of a semi-quantitative Rietveld analysis of natural clays. This is a method to determine the mineralogical composition from XRD patterns. In the Rietveld analysis, the diffraction pattern is refined using a computer program to determine the positions of atoms within the crystal lattice, as well as other structural parameters such as bond lengths, bond angles, and thermal vibrations. This is achieved by comparing the measured diffraction pattern with a simulated pattern generated from a proposed crystal structure.

*Table 3.* Semi-quantitative Rietveld analysis of natural clays collected in Stockholm (S), Göteborg (G), and Malmö (M)

| Phases | Content [wt. %] | | |
|---|---|---|---|
|  | Malmö Clay (M) | Göteborg Clay (G) | Stockholm clay (S) |
| Quartz | 42.0 | 46.5 | 31.0 |
| Albite | 8.4 | 32.0 | 24.1 |
| Microcline | 4.7 | 11.3 | 10.3 |
| Orthoclase | 1.9 | 2.8 | 0.9 |
| Calcite | 30.2 | - | 8.6 |
| Muscovite | 0.4 | 0.1 | 1.2 |
| Illite | 10.1 | 4.8 | 12.9 |
| Chlinochlore | 1.0 | Traces | 7.7 |
| Kaolinite | 1.4 | Traces | 1.6 |
| Cordierite | - | 2.4 | 1.9 |
| Quintinite | - | 0.2 | - |

The mechanochemical activation process was performed in a planetary ball mill, type Retsch PM 100. During this milling procedure, any temperature changes were not measured, considering that the optimal retention time (time of grinding) was only 20 minutes in the ball mill.

A table with different degrees of amorphization obtained is shown in

**Table 4,** as well as the conclusions in this regard. The clays in the planetary ball mill were treated for 20 minutes, while the clays in the vibratory ball mill were treated for 6 hours.

*Table 4.* Degree of amorphization (DOA) achieved for different phases present in clays after grinding.

| Planetary ball mill | | |
|---|---|---|
| Stockholm clay | | |
| DOA | Clay minerals | 90% |
| | Quartz | 18% |
| | Calcite | 70% |

(continued)

| Gothenburg clay | | |
|---|---|---|
| DOA | Clay minerals | 100% |
| | Quartz | 38% |
| | Calcite | Not present |
| Vibratory ball mill | | |
| Gothenburg clay | | |
| DOA | Clay minerals | Average 65 % |
| | Quartz | 10% |
| | Calcite | 30% |
| Stockholm clay | | |
| DOA | Clay minerals | 53% |
| | Quartz | 15% |
| | Calcite | 38% |

From this and after doing trials replacing cement in concrete with the product, it is suggested that natural clays should achieve a minimum and an optimum degree of amorphization of the phases as follow:

- Clay minerals (illite, kaolinite, muscovite) - minimum of 50% - better results in the range of 80-100% of amorphization.
- Quartz - minimum of 10% - better results over 20% of amorphization.
- Calcite - minimum of 30 % - Better results in the range of 70-100%.

Moreover, studies on a different mixture of clay coming from Malmö suggest that the albite amorphization should be as follow:

- Albite - minimum 50% - better results in the range of 65-100%.

The trials and confirmation of the performance were done by two methods. Pastes - blends of cement (80%) with the clay treated by the method according to the present invention (20%) and water. Pastes were assessed by the Frattini test. Mortars - standardized blends of cement (80%) + treated clay (20%) with sand and water. Mortars were assessed by the Strength Activity Index.

Table 5 below shows the settings etc used for the planetary ball mill in accordance with one example of the present invention.

*Table 5.* Characteristics of the Ball mill, Retsch PM 100

| | |
|---|---|
| **Speed ratio** | **1:-2** |
| **Sun wheel speed** | 100 - 650 min-1 |
| G-force | 33.3 g |
| **Drive power** | 750 W |
| **Power consumption** | 1250W (VA) |

Grinding in the vibratory mill from GK achieved maximal temperatures of around 60 degree Celsius after 12 hours, with increasing temperatures of approximately 6-8 degree Celsius after each hour. Since the temperature is low there is no phase transformation due to a high temperature, since that would require a temperature of minimum around 400-500°C.

The trial was performed for 400, 500 and 600 rpm, where around 500 rpm was the optimal speed.

During the treatment of the clay in the mill in accordance with the present invention, tension, friction, collision, pressure, shear forces, etc. change and disrupt the crystalline phase of the clay particles/clay minerals/clay components, whereby part of the clay particles transfer from crystalline to amorphous, i.e., the reactice phase. To assess the changes of crystallinity towards an amorphous phase, i.e. the degree of amorphisation, evaluations were made using X-Ray Diffractometry, XRD. Changes in peak heights mean structural amorphization, which is strictly related to the reactivity of the treated clay.

Results and Discussion

As shown above, it has surprisingly been found that by treating clay in accordance with the method according to the present invention, an excellent binder material, useful as a supplementary cementitious material in e.g., concrete, and which provides an excellent combination of good mechanical properties and good availability, is obtained.

**Claims**

1. A method for treatment of clay, the method comprising:

   a) introducing the clay in a vibratory mill and/or a vibratory ball mill; and
   b) processing the clay in the vibratory mill and/or vibratory ball mill until the clay minerals comprised in the clay have reached a predetermined degree of amorphization, wherein the predetermined degree of amorphization of the clay minerals is at least 40%, preferably at least 45%, more preferably at least 50%.

2. The method according to claim 1, wherein step b) further comprises processing the clay until quartz comprised in the clay has reached a predetermined degree of amorphization, wherein the predetermined degree of amorphization of the quartz is at least 5%, preferably at least 8%, more preferably at least 10%, even more preferably at least 15%, even more preferably at least 18%, most preferably at least 20%.

3. The method according to claim 1 or claim 2, wherein step b) further comprises processing the clay until calcite comprised in the clay has reached a predetermined degree of amorphization, wherein the predetermined degree of amorphization of the calcite is at least 30%, preferably at least 35%, more preferably at least 40%.

4. The method according to any one of the previous claims, wherein the degree of amorphization of the clay minerals is at least 50%, the degree of amorphization of the quartz is at least 20%, and the degree of amorphization of the calcite is at least 30%.

5. The method according to any one of the previous claims, wherein the clay minerals are selected from illite, kaolinite and/or muscovite.

6. The method according to any one of the previous claims, wherein step b) further comprises processing the clay until albite comprised in the clay has reached a predetermined degree of amorphization, wherein the predetermined degree of amorphization of the albite is at least 45%, preferably at least 50%, more preferably 55%; even more preferably at least 60%.

FIG. 1

FIG. 2

FIG. 3

FIG. 4

FIG. 5A

FIG. 5B

FIG. 5C

FIG. 6

FIG. 7

FIG. 8

FIG. 9

FIG. 10

Europäisches
Patentamt

European
Patent Office

Office européen
des brevets

**EUROPEAN SEARCH REPORT**

Application Number

EP 24 15 7653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 3 305150 B2 (SEKISUI CHEMICAL CO LTD) 22 July 2002 (2002-07-22) * paragraph [0004] - paragraph [0030] * | 1-6 | INV. C04B20/02 C04B14/10 |
| X | HOSSEINI SEYEDSAEID ET AL: "Enhanced strength and microstructure of dredged clay sediment-fly ash geopolymer by mechanochemical activation", CONSTRUCTION AND BUILDING MATERIALS, vol. 301, 1 September 2021 (2021-09-01), page 123984, XP093185657, Netherlands ISSN: 0950-0618, DOI: 10.1016/j.conbuildmat.2021.123984 * page 1 - page 8 * | 1-6 | |
| X | KR 2013 0047201 A (BAN BONG CHAN [KR]; KWON HE SOOK [KR]) 8 May 2013 (2013-05-08) * paragraph [0001] - paragraph [0033] * | 1-6 | |
| X | SOURI ALIREZA ET AL: "Pozzolanic activity of mechanochemically and thermally activated kaolins in cement", CEMENT AND CONCRETE RESEARCH, PERGAMON PRESS, ELMSFORD, NY, US, vol. 77, 16 July 2015 (2015-07-16), pages 47-59, XP029269004, ISSN: 0008-8846, DOI: 10.1016/J.CEMCONRES.2015.04.017 * page 47 - page 54 * | 1-6 | **TECHNICAL FIELDS SEARCHED (IPC)** C04B |

The present search report has been drawn up for all claims

| Place of search | Date of completion of the search | Examiner |
|---|---|---|
| Munich | 22 July 2024 | Kresoja, Radoje |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 15 7653

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | | Publication date | Patent family member(s) | | Publication date |
|---|---|---|---|---|---|
| JP 3305150 | B2 | 22-07-2002 | JP | 3305150 B2 | 22-07-2002 |
| | | | JP | H08225349 A | 03-09-1996 |
| KR 20130047201 | A | 08-05-2013 | NONE | | |

EPO FORM P0459

For more details about this annex : see Official Journal of the European Patent Office, No. 12/82